# EUROPÄISCHE PATENTSCHRIFT

(11) **EP 2 221 201 B1**
(45) Veröffentlichungstag und Bekanntmachung des Hinweises auf die Patenterteilung: **06.11.2013**
(21) Anmeldenummer: 10153224.0
(22) Anmeldetag: 10.02.2010
(51) Int. Cl.: B60H 1/34

(54) **Luftausströmer**
Air vent
Dispositif d'écoulement d'air

(30) Priorität: 11.02.2009 DE 102009008415
(43) Veröffentlichungstag der Anmeldung: 25.08.2010
(73) Patentinhaber: Behr GmbH & Co. KG, 70469 Stuttgart (DE)
(72) Erfinder: Fritsche, Uwe, 71686 Remseck am Neckar (DE); Zeller, Kuno, 70435 Stuttgart (DE); Tidelski, Axel, 70435 Stuttgart (DE); Röhm, Klaus, 70736 Fellbach (DE); D'Angelo, Marco, 70469 Stuttgart (DE); Fieger, Martin, 71636 Ludwigsburg (DE)
(74) Vertreter: Grauel, Andreas

(56) Entgegenhaltungen:
- EP-A1- 1 785 299
- EP-A2- 1 950 066
- DE-A1-102006 049 622

## Beschreibung

Die Erfindung betrifft einen Luftausströmer gemäß dem Oberbegriff des Anspruches 1 und eine Kraftfahrzeugklimaanlage.

In Kraftfahrzeugen werden Luftausströmer eingesetzt, um Luft in den Innenraum des Kraftfahrzeuges einzuleiten. Die in den Innenraum mittels LUftausströmer eingeleitete Luft wird, soweit Bedarf besteht, in einer Klimaanlage erwärmt und/oder gekühlt.

Es sind Luftdüsen oder Luftausströmer bekannt, welche eine erste Auslassöffnung zum Ausleiten der Luft als Spotstrahl und eine zweite Auslassöffnung zum Ausleiten der Luft als Diffus-oder Drallstrahl aufweisen. Bei einem Drallstrahl weist die Luft an der zweiten Auslassöffnung eine schraubenlinienförmige Strömung auf. Die Luftströmung weist somit eine Translationsbewegung und eine Rotationsbewegung auf. Die der zweiten Auslassöffnung durch einen Luftzuführungskanal mit einer Strömung in einer Translationsbewegung zugeleitete Luft wird im Bereich der zweiten Auslassöffnung mittels Luftleitvorrichtungen zusätzlich dahingehend umgelenkt, dass die Strömung auch eine Rotationsbewegung aufweist. Zur Steuerung der aus der ersten und zweiten Auslassöffnung ausleitbaren Luft sind die Luftausströmer mit Luftklappen versehen.

Die DE 10 2005 054 292 A1 zeigt einen gattungsbildenden Luftausströmer für ein Kraftfahrzeug. Der Luftausströmer weist zwei im Querschnitt kreisförmige Auslassöffnungen zum Ausleiten der Luft als Spotstrahl und Auslassöffnungen zum Ausleiten der Luft als Diffus- oder Drallstrahl auf. Die Auslassöffnungen zum Ausleiten der Luft als Diffus- oder Drallstrahl können von zwei Luftklappen geöffnet und geschlossen werden, die um zwei separate Schwenkachsen verschwenkbar sind. Diese beiden Luftklappen sind E-förmig, d, h. weisen bei einer Ansicht senkrecht zu einer Klappenebene zwei Ausnehmungen auf. Aufgrund der Geometrie der beiden Luftklappen, insbesondere der Ausnehmungen, können die Ausiassöffnungen mit den beiden Luftklappen nur sehr schwierig abgedichtet werden. Die Ausdehnung jeder der beiden Luftklappen in einer vollständig geschlossenen Stellung parallel Zu einer Querschnittsebene eines Luftzuführungskanales und senkrecht zu der Schwenkachse beträgt nur knapp die Hälfte der Abmessung des Luftausströmers in dieser Richtung. Außerdem erhöhen die erforderlichen beiden Schwenkachsen für die beiden Luftklappen den konstruktiven Aufwand des Luftausströmers.

Die EP 1 785 299 A1, die den nächstliegenden Stand der Technik darstellt, offenbart ein Luftausströmer nach dem Oberbegriff des unabhängigen Anspruchs 1.

Die Aufgabe der vorliegenden Erfindung besteht deshalb darin, eine Luftausströmer und eine Kraftfahrzeugklimaanlage zur Verfügung zu stellen, bei der die aus Auslassöffnungen ausleitbare Luftmenge für einen Spot- und einen Drallstrahl einfach mit einem geringen konstruktiven Aufwand gesteuert werden kann. Ferner soll das vollständige Verschließen der Auslassöffnungen zuverlässig ausgeführt werden können und der Luftausströmer wenig Bauraum benötigen.

Diese Aufgabe wird gelöst mit einem Luftausströmer, nach den Merkmalen des unabhängigen Anspruchs 1.

Die Bewegungsrichtung der wenigstens einen ersten bzw. zweiten Luftleiteinrchtung ist insbesondere eine Komponente der Bewegungsrichtung der wenigstens einen ersten bzw. zweiten Luftleiteinrichtung parallel zu der Querschnittsebene des wenigstens einen ersten bzw. zweiten Lutftzuführungskanales. Insbesondere steht bei einer Ausführung der wenigstens einen ersten bzw. zweiten Luftleiteinrichtung als erste bzw. zweite Luftklappe die Bewegungsrichtung senkrecht zu einer Schwenkachse der ersten bzw, zweiten Luftklappe.

In einer weiteren Ausgestaltung ist die wenigstens eine erste Luftleiteinrichtung und/oder die wenigstens eine zweite Luftleiteinrichtung ein Schirm oder ein Rollband.

In einer weiteren Variante dient die wenigstens eine erste Luftleiteinrichtung zur Steuerung der aus der wenigstens einen ersten und zweiten Auslassöffnung ausleitbaren Luftmenge und die wenigstens eine zweite Luftleiteinrichtung nur Steuerung der aus der wenigstens einen zweiten Auslassöffnung ausleitbaren Luftmenge.

In einer weiteren Ausgestaltung dient die wenigstens eine zweite Luftleiteinrichtung zur Steuerung der aus der wenigstens einen ersten und zweiten Auslassöffung ausleitbaren Luftmenge und die wenigstens eine erste Luftleiteinrichtung nur Steuerung der aus der wenigstens einen ersten AuslassÖffnung ausleitbaren Luftmenge.

Erfindungsgemäß stehen die wenigstens eine erste Luftleiteinrichtung und die wenigstens eine zweite Luftleiteinrichtung in der vollständig geschlossenen Stellung in unmittelbaren Kontakt zu zwei gegenüberliegenden Außenwandungen des Luftausströmers oder sind lediglich durch einen Leckluftspalt von den beiden gegenüberliegenden Außenwandungen des Luftausströmers beabstandet.

In einer weiteren Ausgestaltung sind die wenigstens eine erste Luftleiteinrichtung und/oder die wenigstens eine zweite Luftleiteinrichtung dahingehend miteinander kinematisch gekoppelt, dass in einer ersten Stellung der wenigstens eine erste Luftzuführungskanal im Wesentlichen vollstäandig geschlossen und der wenigstens eine zweite Luftzuführungskanal vollständig geöffnet sind und in einer zweiten Stellung der wenigstens eine erste Luftzuführungskanal vollständig geöffnet und der wenigstens eine zweite Luftzuführungskanal im Wesentlichen vollständig geschlossen sind,

In einer weiteren Ausgestaltung sind die wenigstens eine erste Luftleiteinrichtung und/oder die wenigstens eine zweite Luftleiteinrichtung dahingehend miteinander kinematisch gekoppelt, dass in einer ersten Stellung der wenigstens eine erste Luftzuführungskanal im Wesentlichen vollständig geschlossen und der wenigstens eine zweite Luftzuführungskanal im Wesentlichen vollständig geschlossen sind und in einer zweiten Stellung der wenigstens eine erste Luftzuführungskanal vollstandig geöffnet und der wenigstens eine zweite Luftzuführungskarlal vollständig geöffnet sind.

In einer ergänzenden Ausführungsform sind Stellungen der wenigstens einen ersten Luftleiteinrichtung und der wenigstens einen zweiten Luftleifeinrichtung zwischen der ersten Stellung und der zweiten Stellung, vorzugsweise stufenlos, von nur einer Bedieneinheit einstellbar. Der Luftausströmer kann damit besonders einfach von nur einer Bedieneinheit, z. B. ein Stellrad bedient werden. Mittel des nur einen Stellrades ist es möglich, stufenlos die Luftmenge zu steuern, welche aus der wenigstens einen ersten Auslassöffnung oder der wenigstens einen zweiten Auslassöffnung ausleitbar ist.

Vorzugsweise ist in einem ersten Luftzuführungskanal nur eine erste Luftleiteinrichtung angeordnet und/oder in einem zweiten Luftzuführungskanal ist nur eine zweite Luftleiteinrichtung angeordnet. Bei einer Anordnung von nur einer Luftleiteinnchtung jeweils für einen Luftzuführungskanal kann der Luftzuführungskanal besonders einfach und zuverlässig in einer vollständig geschlossenen Stellung der Luftleiteitirichtung abgedichtet bzw. abgeschlossen werden.

In einer Variante sind wenigstens zwei erste Luftleiteinrichtungen kinematiscn gekoppelt, z. B. mittels einer Welle und/oder einer Hebel und/oder einem Zahnrad.

Zweckmäßig sind wenigstens zwei zweite Luftleiteinrichtungen kinematisch gekoppelt, z, B, mittels einer Welle und/oder einem Hebel und/oder einem Zahnrad.

In einer weiteren Ausführungsform ist die wenigstens eine erste Luftleiteinrichtung und/oder die wenigstens eine zweite Luftleiteinrchtung in Form und/oder Abmessung derart ausgebildet, dass der erste Luftzuführungskanal und/oder der zweite Luftzuführungskanal im Wesentlichen vollständig verschließbar ist.

Insbesondere weist die wenigstens eine zweite Luftklappe in einer Ansicht senkrecht zu einer Klappenebene der wenigstens einen zweiten Luftklappe keine Ausnehmung auf. Eine Luftklappe ohne Ausnehmungen weist besondere Vorteile auf, Luftklappen mit einer Ausnehmung sind im Allgemeinen in einer geschlossenen Stellung der Luftklappe in dem Luftzuführungskanal nur schwer abzudichten. Die kompilierte Geometrie der Ausnehmung der Luftklappe erschwert das Abdichten des Luftzuführungskanales mit Hilfe der Luftklappe.

In einer weiteren Ausgestaltung weist die wenigstens eine erste Luftklappe und/oder die wenigstens zweite Luftklappe am Rand Dichtungselemente, z. B. eingesteckte oder aufgeklebt Schaumdichtungen, Gummieinsätze, auf. Vorzugsweise sind die Dichtelemente mittels Umspritzung mit der ersten und/oder zweiten Luftklappe verbunden.

Insbesondere ist die wenigstens eine erste und/oder die wenigstens eine zweite Luftklappe im Wesentlichen als ein mehreckige Gebilde, z, B. drei-oder viereckig, insbesondere rechteckförmig, ausgebildet oder die wenigstens eine erste und/oder die wenigstens eine zweite Lufftleiteinrchtung ist in einer geschlossenen Stellung im Wesentlichen als ein mehreckiges Gebilde, z. B. drei- oder viereckig, insbesondere rechteckförmig, innerhalb des wenigstens einen ersten Luftzuführungskanales und/oder des wenigstens einen zweiten Luftzuführungskanales ausgebildet Diese einfache Geometrie der ersten und/oder zweiten Luftklappe bzw. der ersten und/oder zweiten Luftleiteinrichtung ermöglicht ein einfaches und zuverlässiges Abdichten des ersten und/oder zweiten Luftzuführungskanales, weil in einer vollständig geschlossenen Stellung der ersten und/oder zweiten Luftleiteinrichtung bzw. der ersten und/oder zweiten Luftklappe die Berührungsgeometrie zwischen dem ersten und/oder zweiten Luftzuführungskanal und der ersten und/oder zweiten Luftleifeinrichtung bzw. der ersten und/oder zweiten Luftklappe sehr einfach ist, insbesondere drei-oder viereckig, insbesondere rechteckförmig.

In einer vorteilhaften Weiterbildung ist eine erste und/oder die wenigstens eine zweite Luftklappe zumindest in einem Bereich, der sich von der Schwenkachse zum äußeren Ende der Klappe erstreckt im wesentlichen trapezförmig ausgebildet, wobei insbesondere der achsnahe Bereich breiter ist, als der achsferne. Für den Fall, dass eine solche Ausbildung in beiden Richtungen von der Achse ausgehend vorgesehen ist, ergibt sich als Gesamtform der Klappe ein Doppeltrapez.

In einer weiteren Ausgestaltung ist der Luftausströmer mit wenigstens einem Mittel zur Erzeugung eines Diffus- oder Drallstrahles an der wenigstens einen zweiten Auslassöffnung versehen, z. B. in dem wenigstens einen zweiten Luftzuführungskanal.

In einer ergänzenden Variante ist das wenigstens eine Mittel als schrauben-oder schneckenförmige Luftleitvorrichtung, z. B. eine Wandung oder ein wandartiger Vorsprung, ausgebildet.

In einer weiteren Variante ist die wenigstens eine erste Auslassöffnung im Querschnitt im Wesentlichen kreis- oder ellipsenförmig ausgebildet.

In einer weiteren Ausgestaltung ist die wenigstens eine erste Auslassöffnung im Querschnitt innerhalb der wenigstens einen zweiten Auslassöffnung ausgebildet und/oder die wenigstens eine zweite Auslassöffnung ist konzentrisch um die wenigstens eine erste Auslassöffnung ausgebildet.

Eine erfindungsgemäße Kraftfahrzeugklimaanlage umfasst wenigstens einen in dieser Anmeldung beschriebenen Luftausströmer.

Ein erfindungsgemäßes Kraftfahrzeug umfasst wenigstens einen beschriebene Luftausströmer und/oder eine beschriebene Kraftfahrzeugklimaanlage.

In einer weiteren Ausgestaltung umfasst die Kraftfahrzeugklimaanlage einen Kältemittelverdampfer und/oder ein Gebläse und/oder einen Luftfilter.

Im Nachfolgenden wird ein Ausführungsbeispiel der Erfindung unter Bezugnahme auf die beigefügten Zeichnungen näher beschrieben. Es zeigt:
- Fig. 1: eine perspektivische Ansicht eines Luftausströmers,
- Fig. 2: eine Vorderansicht des Luftausströmers gemäß Fig. 1,
- Fig. 3: eine Seitenansicht des Luftausströmers gemäß Fig. 1,
- Fig. 4: eine Rückansicht des Luftausströmers gemäß Fig. 1,
- Fig. 5: einen Schnitt B-B gemäß Fig. 2 mit einer ersten Luftklappe in einer geöffneten Stellung.
- Fig. 6: den Schnitt B-B gemäß Fig. 2 mit der ersten Luftklappe in einer geschlossenen Stellung.
- Fig. 7: einen Schnitt A-A gemäß Fig. 3 mit drei zweiten Luftklappen in einer geöffneten Stellung, und
- Fig. 8: eine Rückansicht eines alternativen Ausführungsbeispiels einer Luftausströmers.

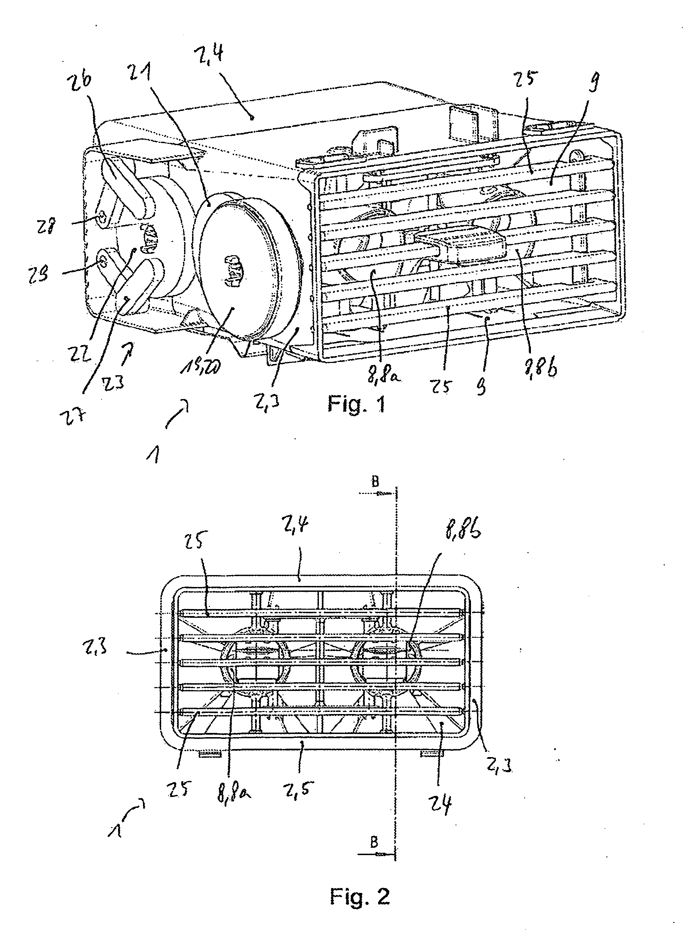

In Fig. 1 ist eine perspektivische Ansicht eines Luftausströmers 1 für ein Kraftfahrzeug abgebildet. Der Luftausströmer 1 dient dazu, um Luft in den Fahrzeuginnenraum eines Kraftfahrzeuges einzuleiten (nicht dargestellt). Der Luftausströmer 1 umfasst ein Gehäuse 2 mit zwei Seitenwandungen 3, einer Deckwandung 4 und einer Bodenwandung 5 (Fig.1 1 und 2).

Der Luftausströmer 1 weist zwei erste Auslassöffnungen 8 zum Ausleiten der Luft als Spotstrahl auf. Der Luftausströmer 1 ist dabei mit einer linken ersten Auslassöffnung 8a und mit einer zweiten rechten ersten Auslassöffnung 8b versehen (Fig. 1 und 2). Ferner weist der Luftausströmer 1 drei zweite Auslassöffnung 9, 9a, 9b, 9c zum Ausleiten der Luft als den Diffus- oder Drallstrahl auf.

Zur Erzeugung einer diffusen oder drallartigen Luftströmung im Bereich der zweiten Auslassöffnungen 9, 9a, 9b, 9c sind schrauben-oder schneckenförmige Luftleitvorrichtungen 24 vorhanden (Fig. 2).

Der Luftausströmer 1 weist zwei erste Luftzuführungskanäle 6 auf. Ein erster linker erster Luftzuführungskanal 6a mündet in die erste linke erste Auslassöffnung 8a und ein zweiter rechter erster Luftzuführungskanal 6b mündet in die zweite rechte erste Auslassöffnung 8b. Ferner weist der Luftausströmer 1 drei zweite Luftzuführungskanäle 7, 7a, 7b, 7c auf. Die drei zweiten Luftzuführungskanäle 7a, 7b, 7c münden dabei jeweils in die zweiten Auslassöffnungen 9a, 9b, 9c, aus der die Luft als Diffus- oder Drallstrahl ausgeleitet wird. Die zwei ersten Luftzuführungskanäle 6, 6a, 6b und die drei zweiten Luftzuführungskanäle 7, 7a, 7b, 7c werden dabei innerhalb der Wandungen 3, 4, 5, des Gehäuses 2 des Luftausströmers 1 von Luftleitwandungen 18 gebildet bzw, eingeschossen. Die Luftleitwandungen 18 sind nicht beweglich innerhalb des Gehäuses 2 ausgebildet. Am Ende der beiden ersten Luftzuführungskanäle 6, 6a, 6b ist jeweils ein verschwenkbarer Rohrstutzen 30 ausgebildet. Die Rohrstutzen 30 sind dabei um eine vertikale Achse verschwenkbar, so dass der als Spotstrahl aus den ersten Auslassöffnungen 8, 8a, 8b austretende Luftstrahl in horizontaler Richtung steuerbar ist (nicht dargestellt). Die zweiten Auslassöffnungen 9, 9a, 9b, 9c weisen ferner Lamellen 25 auf. Die Lamellen 25 können um eine horizontale Richtung verschwenkt werden, so dass der aus den ersten Auslassöffnungen 8 und den zweiten Auslassöffnungen 9 austretende Luftstrahl in einer vertikalen Richtung steuerbar ist (nicht dargestellt).

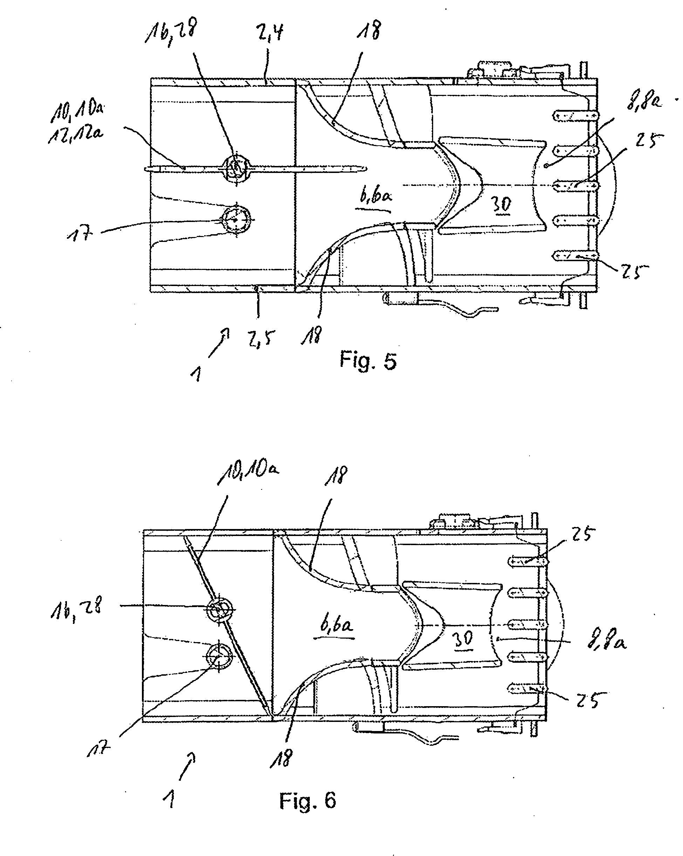

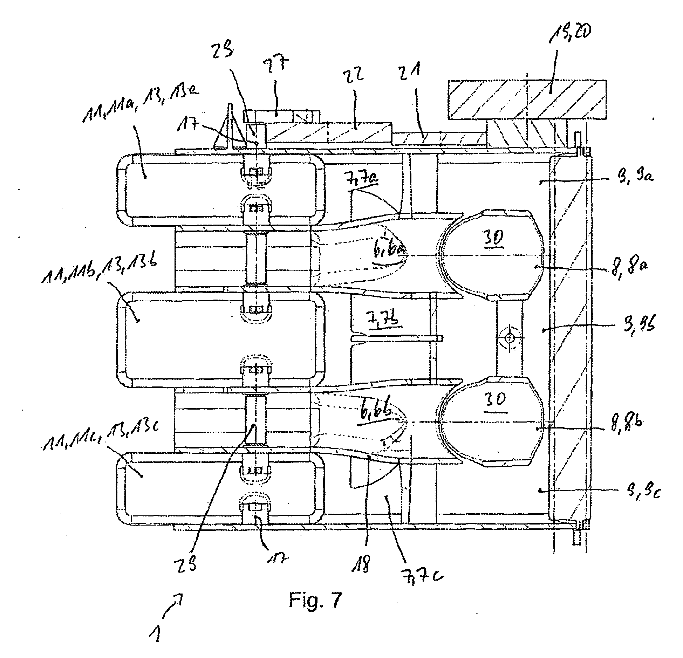

In dem ersten Luftzuführungskanal 6a ist eine als erste Luftklappe 12a ausgebildete erste Luftleiteinrichtung 10a angeordnet (Fig. 5 und 6). In analoger Weise ist in dem ersten Luftzuführungskanal 6b eine als erste Luftleiteinrichtung 10b ausgebildete erste Luftklappe 12b angeordnet (nicht dargestellt), In jedem ersten Luftzuführungskanal 6 ist damit jeweils eine als erste Luftklappe 12 ausgebildete erste Luftleiteinrichtung 10 angeordnet. In analoger Weise in jedem der drei zweiten Luftzuführungskanäle 7, 7a, 7b, 7c jeweils eine als zweite Luftklappe 13, 13a, 13b, 13c ausgebildete zweite Luftleiteinrichtung 11, 11a, 11b, 11c angeordnet (Fig. 7).

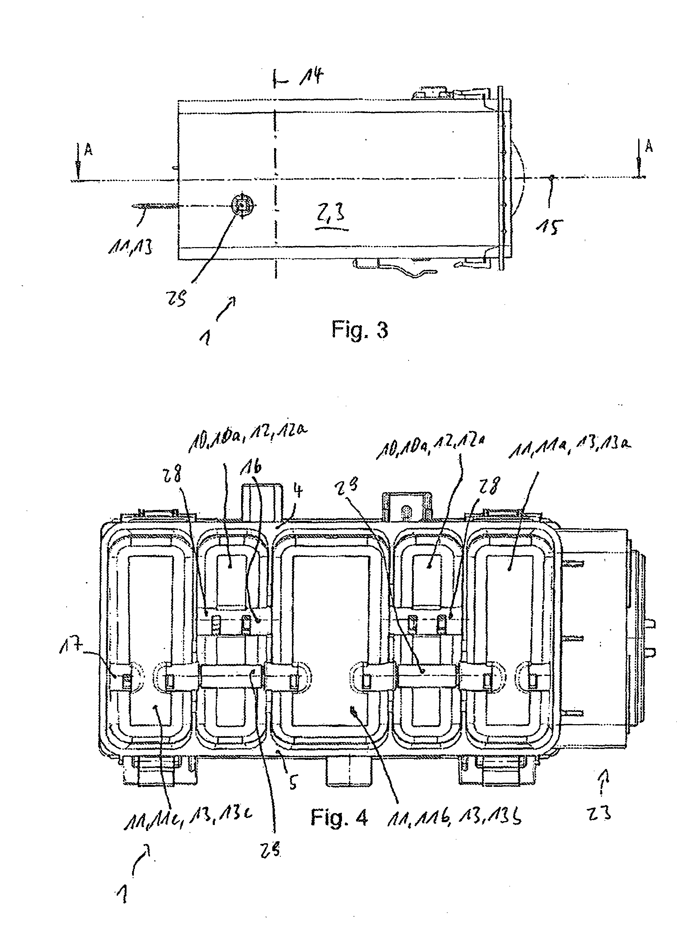

Die beiden ersten Luftklappen 12 sind um eine erste Schwenkachse 16 verschwenkbar. Hierzu sind beide erste Luftklappen 12 mittels einer ersten Welle 28 miteinander verbunden (Fig. 4, 5 und 6). In analoger Weise sind die drei zweiten Luftklappen 13 um eine zweite Schwenkachse 17 verschwenkbar und mit einer zweiten Welle 29 miteinander verbunden (Fig. 4 und 7). In Fig. 4 sind beide erste Luftklappen 12 und die drei zweiten Luftklappen 13 in einer vollständig geschlossenen Stellung dargestellt. Diese Stellung der beiden ersten Luftklappen 12 und der drei zweiten Luftklappen 13 tritt in der Praxis nicht auf, weil entweder die zwei ersten Luftklappen 12 in einer vollständig geschlossenen Stellung sind und die drei zweiten Luftklappen 13 in einer völlig geöffneten Stellung sind oder umgekehrt. In der vollständig geschlossenen Stellung der drei zweiten Luftklappen 13 berühren die zweiten Luftklappen 13 die Bodenwandung 5 und die Deckwandung 4 des Luftausströmers 1. Dies gilt in analoger Weise für die beiden ersten Luftklappen 12.

Die beiden ersten Luftzuführungskanäle 6 und die drei zweiten Luftzuführungskanäle 7 weisen eine Querschnittsebene 14 auf. Die Querschnittsebene 14 steht senkrecht zu einer Längsachse 15 der ersten Luftzuführungskanäle 6 und der zweiten Luftzuführungskanäle 7 (Fig. 3). Die Ausdehnung der drei zweiten Luftklappen 13 in der vollständig geschlossenen Stellung beträgt wenigstens 80 % der Abmessung des Luftausströmers 1 parallel zu der Querschnittsebene 14. Die Abmessung des Luftausströmers 1 in Richtung der Querschnittsebene 14 entspricht dem Abstand zwischen der Deckwandung 4 und der Bodenwandung 5.

Der Luftausströmer 1 ist mit einem Mechanismus 23 zum Bewegen einer ersten und zweiten Welle 28, 29 versehen. Der Mechanismus 23 ist in Fig. 2 nicht abgebildet. Der Mechanismus 23 umfasst eine als Stellrad 19 ausgebildete Bedieneinheit 20. Eine Kurvenscheibe 22 steht in Wirkverbindung mit einem ersten Abgreifarm 26 und einem zweiten Abgreifarm 27. Der erste Abgreifarm 26 ist mit der ersten Welle 28 verbunden und der zweite Abgreifarm 27 ist mit der zweiten Welle 29 verbunden. Das Stellrad 19 und die Kurvenscheibe 22 sind mechanisch mittels eines Koppelzahnrades 21 miteinander gekoppelt. Beim Verdrehen des Stellrades 19 durch einen Benutzer des Luftausströmers 1 führt somit die Rotationsbewegung des Stellrades 19 mittels des Koppelzahnrades 21 zu einer Rotationsbewegung der Kurvenscheibe 22 (nicht dargestellt). In einer ersten Position des Stellrades 19 bzw. der Kurvenscheibe 22 befinden sich die beiden ersten Luftklappen 12 in einer vollständig geschlossenen Stellung, so dass die beiden ersten Luftzuführungskanäle 6 vollständig geschlossen sind und die drei zweiten Luftklappen 13 sind in einer vollständig geöffneten Stellung, so dass die drei zweiten Luftzuführungskanäle 7 vollständig geöffnet sind. Bei einem Verdrehen des Stellrades 19 von dieser ersten Position zu einer zweiten Position öffnen sich die ersten Luftklappen 12 und die zweiten Luftklappen 13 schließen sich. Beim Erreichen der zweiten Position des Stellrades 19 sind umgekehrt zu der ersten Stellung des Stellrades 19 die ersten Luftklappen 12 vollständig geöffnet und die zweiten Luftklappen 13 vollständig geschlossen. Dies wird ermöglicht durch die Geometrie der Kurvenscheibe 22, die von dem ersten und zweiten Abgreifarm 26, 27 abgefragt bzw. abgetastet wird. Dadurch können in vorteilhafter Weise Zwischenstellungen der ersten Luftklappe 12 und der zweiten Luftklappe 13 von nur einer Bedieneinheit 20 bedient werden (nicht dargestellt). Vorliegend ist der Mechanismus 23 auch dahingehend ausgebildet, dass beide ersten Luftklappen 12 und die drei zweiten Luftklappen 13 in einer Position eine vollständig geschlossenen Stellung und in einer weiteren Position eine vollständig geöffnete Stellung einnehmen können.

Der Luftausströmer 1 besteht im Wesentlichen aus Kunststoff. Insbesondere besteht das Gehäuse 2, die Luftleitwandungen 18 und die ersten und zweiten Luftklappen 12, 13 im Wesentlichen aus Kunststoff Vorzugsweise bestehen auch die Lamellen 25 und die Luftleitvorrichtungen 24 aus Kunststoff. Die Länge des Luftausströmers 1 liegt im Bereich von 10 bis 15 cm oder 70 mm bis 300 mm, d. h. die Abmessung des Luftausströmers 1 in Richtung der Längsachse 15 des ersten bzw, zweiten Luftzuführungskanales 6, 7 beträgt 10 bis 15 cm oder 70 mm bis 300 mm, vorzugsweise 100 mm bis 200 mm.

Insgesamt betrachtet sind mit dem erfindungsgemäßen Luftausströmer 1 erhebliche Vorteile verbunden. Die Luftklappen 12, 13 des Luftausströmers 1 sind rechteckförmig, so dass das Abdichten des ersten und zweiten Luftzuführungskanales 6, 7 besonders einfach ausgeführt werden kann. Die Geometrie zwischen den Luftklappen 12, 13 und den Luftzuführungskanälen 6, 7 ist damit besonders einfach, d. h. rechteckförmig, so dass das Abdichten in einer geschlossenen Stellung der Luftklappen 12, 13 besonders zuverlässig und sicher ausgeführt werden kann. Ferner weisen die ersten Luftklappen 12 zum Öffnen und Verschließen der ersten Auslassöffnungen 8 zum Ausleiten der Luft als Spotstrahl nur eine erste Schwenkachse 16 auf und in analoger Weise sind die zweiten Luftklappen 13 zur Steuerung der aus den zweiten Auslassöffnungen 9 ausleitbaren Luftmenge als Diffus- oder Spotstrahl ebenfalls nur um eine zweite Schwenkachse 17 verschwenkbar. Damit ist der Mechanismus zum Bewegen der ersten und zweiten Luftklappe 12, 13 konstruktiv besonders einfach ausgebildet und damit zuverlässig. Die beiden Schwenkachsen können beispielsweise auch so achsgleich ausgebildet sein, dass eine Achse als Hohlwelle ausgeführt und die jeweils andere durch diese hindurchgeführt ist.

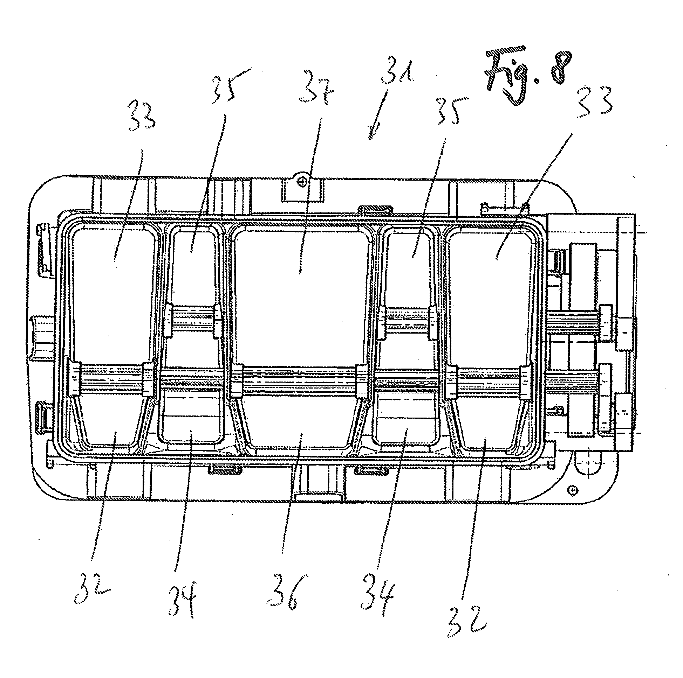

Die Figur 8 zeigt schematisch eine Rückansicht eines alternativen Ausführungsbeispiels eines Luftausströmers 31, bei welchem alternativ zur Figur 4 die Klappen 32,33,34,35,36 und 37 nicht rechteckig ausgebildet sind. In einer vorteilhaften Weiterbildung ist eine erste und/oder die wenigstens eine zweite Luftklappe 32,33,34,35,36 und 37 zumindest in einem Bereich, der sich von der Schwenkachse zum äußeren Ende der Klappe erstreckt im wesentlichen trapezförmig ausgebildet, wobei insbesondere der achsnahe Bereich breiter ist, als der achsferne Bereich. Dies ist zu sehen bei den Klappen 32,35,36. Weiterhin ist es vorteilhaft, wenn insbesondere der achsnahe Bereich schmäler ist, als der achsferne Bereich. Dies ist zu sehen bei den Klappen 33,34,37.

Für den Fall, dass eine solche trapezförmige Ausbildung in beiden Richtungen, von der Achse ausgehend, vorgesehen ist, ergibt sich als Gesamtform der Klappe ein Doppeltrapez, bei dem ein Teil des Trapez an der Achse breiter ist als an dem fernen Ende und bei dem ein weiteres Teil des Doppeltrapez an der Achse enger ist als an dem diesbezüglich fernen Ende.

### Bezugszeichenliste

- 1: Luftausströmer
- 2: Gehäuse
- 3: Seitenwandung
- 4: Deckwandung
- 5: Bodenwandung
- 6: Erster Luftzuführungskanal (6a, 6b)
- 7: Zweiter Luftzuführungskanal (7a, 7b, 7c)
- 8: Erste Auslassöffnung (8a, 8b)
- 9: Zweite Auslassöffnung (9a, 9b, 9c)
- 10: Erste Luftleiteinrichtung (10a, 10b)
- 11: Zweite Luftleiteinrichtung (11a, 11b, 11 c)
- 12: Erste Luftklappe (12a, 12b)
- 13: Zweite Luftklappe (13a, 13b, 13c)
- 14: Querschnittsebene
- 15: Längsachse des Luftzuführungskanales
- 16: Erste Schwenkachse
- 17: Zweite Schwenkachse
- 18: Luftleitwandung
- 19: Stellrad
- 20: Bedieneinheit
- 21: Koppelzahnrad
- 22: Kurvenscheibe
- 23: Mechanismus
- 24: Luftleitvorrichtung
- 25: Lamelle
- 26: Erster Abgreifarm
- 27: Zweiter Abgreifarm
- 28: Erste Welle
- 29: Zweite Welle
- 30: Rohrstutzen
- 31: Luftausströmer
- 32: Klappe
- 33: Klappe
- 34: Klappe
- 35: Klappe
- 36: Klappe
- 37: Klappe

## Patentansprüche

1. Luftausströmer (1), insbesondere für ein Fahrzeuginnenraum-Bolüftungssystem, umfassend
- wenigstens einen ersten Luftzuführungskanal (6, 6a, 6b) und wenigstens einen zweiten Luftzuführungskanal (7, 7a, 7b, 7c),
- wenigstens eine erste Auslassöffnung (8, 8a, 8b) zum Ausleiten der Luft aus dem wenigstens einen ersten Luftzuführungskanal (6, 6a, 6b) als Spotstrahl,
- wenigstens eine zweite Auslassöffnung (9, 9a, 9b, 9c) zum Ausleiten der Luft aus dem wenigstens einen zweiten Luftzuführungskanal (7, 7a, 7b, 7c) als Diffus- oder Drallstrahl,
- wenigstens eine erste Luftleiteinrichtung (10, 10a, 10b), insbesondere wenigstens eine erste Luftklappe (12, 12a, 12b), zur Steuerung der aus der wenigstens einen ersten Auslassöffnung (8, 8a, 8b) ausleitbaren Luftmenge,
wenigstens eine zweite Luftleiteinrichtung (11, 11a, 11 b, 11c), insbesondere wenigstens eine zweite Luftklappe (13, 13a, 13b, 13c), zur Steuerung der aus der wenigstens einen zweiten Auslassöffnung (9, 9a, 9b, 9c) ausleitbaren Luftmenge, wobei die Ausdehnung parallel zu einer Querschnittsebene (14) des wenigstens einen ersten Luftzuführungskanales (6, 6a, 6b) der wenigstens einen ersten Luftleiteinrichtung (10, 10a, 10b) in einer vollständig geschlossenen Stellung wenigstens 50% der, vorzugsweise maximalen, Abmessung des Luftausströmers (1) parallel zu der Querschnittsebene (14) des wenigstens einen ersten Luftzuführungskanales (6, 6a, 6b) beträgt, wobei die Ausdehnung und die Abmessung in einer Bewegungsrichtung oder einer Komponente der Bewegungsrichtung der wenigstens einen ersten Luftleiteinrichtung (10, 10a, 10b) in einer Richtung parallel zu der Querschnittsebene (14) des wenigstens einen ersten Luftzuführungskanales (6, 6a, 6b) erfasst ist und/oder die Ausdehnung parallel zu der Querschnittsebene (14) des wenigstens einen zweiten Luftzuführungskanales (7, 7a, 7b, 7c) der wenigstens einen zweiten Luftleiteinrichtung (31, 11a, 11b, 11c) in einer vollständig geschlossenen Stellung wenigstens 50% der, vorzugsweise maximalen, Abmessung des Luftausströmers (1) parallel zu der Querschnittsebene (14) des wenigstens einen zweiten Luftzuführungskanales (7, 7a, 7b, 7c) beträgt, wobei die Ausdehnung und die Abmessung in einer Bewegungsrichtung oder einer Komponente der Bewegungsrichtung der wenigstens einen zweiten Luftleiteinrichtung (11, 11a, 11b, 11c) in einer Richtung parallel zu der Querschnittsebene (14) des wenigstens einen zweiten Luftzuführungskanales (7, 7a, 7b, 7c) erfasst ist,
**dadurch gekennzeichnet,**
**dass** die wenigstens eine erste Luftleiteinrichtung (10, 10a, 10b) und die wenigstens eine zweite Luftleiteinrichtung (11, 11a, 11b, 11 c) in der vollständig geschlossenen Stellung in unmittelbaren Kontakt zu zwei gegenüberliegenden Außenwandungen (3, 4, 5) des Luftausströmers (1) stehen oder lediglich durch einen Leckluftspalt von den beiden gegenüberliegenden Außenwandungen (3, 4, 5) des Luftausströmers (1) beabstandet sind.

2. Luftausströmer nach Anspruch 1, **dadurch gekennzeichnet, dass** die wenigstens eine erste Luftleiteinrichtung (10, 10a, 10b) und/oder die wenigstens eine zweite Luftleiteinrichtung (11, 11a, 11b, 11c) dahingehend miteinander kinematisch gekoppelt sind, dass in einer ersten Stellung der wenigstens eine erste Luftzuführungskanal (6, 6a, 6b) im Wesentlichen vollständig geschlossen und der wenigstens eine zweite Luftzuführungskanal (7, 7a, 7b, 7c) vollständig geöffnet sind und in einer zweiten Stellung der wenigstens eine erste Luftzuführungskanal (6, 6a, 6b) vollständig geöffnet und der wenigstens eine zweite Luftzuführungskanal (7, 7a, 7b, 7c) im Wesentlichen vollständig geschlossen sind.

3. Luftausströmer nach Anspruch 2, **dadurch gekennzeichnet, dass** Stellungen der wenigstens einen ersten Luftleiteinrichtung (10), 10a, 10b) und der wenigstens einen zweiten Luftleiteinrichtung (11, 11a, 11b, 11c) zwischen der ersten Stellung und der zweiten Stellung, vorzugsweise stufenlos, von nur einer Bedieneinheit (20) einstellbar sind.

4. Luftausströmer nach einem oder mehreren der vorhergehenden Ansprüche, **dadurch gekennzeichnet, dass** in einem ersten Luftzuführungskanal (6, 6a, 6b) nur eine erste Luftleiteinrichtung (10, 10a, 10b) angeordnet ist und/oder in einem zweiten Luftzuführungskanal (7, 7a, 7b, 7c) nur eine zweite Luftleiteinrichtung (11, 11a, 11b, 11c) angeordnet ist.

5. Luftausströmer nach einem oder mehreren der vorhergehenden Ansprüche, **dadurch gekennzeichnet, dass** wenigstens zwei erste Luftleiteinrichtungen (10, 10a, 10b) kinematisch gekoppelt sind, z. B. mittels einer Welle (28) und/oder einem Hebel und/oder einem Zahnrad.

6. Luftausströmer nach einem oder mehreren der vorhergehenden Ansprüche, **dadurch gekennzeichnet, dass** wenigstens zwei zweite Luftleiteinrichtungen (11, 11a, 11b, 11 c) kinematisch gekoppelt sind, z. B. mittels einer Welle (29) und/oder einem Hebel und/oder einem Zahnrad.

7. Luftausströmer nach einem oder mehreren der vorhergehenden Ansprüche **dadurch gekennzeichnet, dass** die wenigstens eine erste Luftleiteinrichtung (10, 10a, 10b) und/oder die wenigstens eine zweite Luftleiteinrichtung (11, 11a, 11b, 11c) in Form und/oder Abmessung derart ausgebildet ist, dass der erste Luftzuführungskanal (6, 6a, 6b) und/oder der zweite Luftzuführungskanal (7, 7a, 7b, 7c) im Wesentlichen vollständig verschließbar ist.

8. Luftausströmer nach einem oder mehreren der vorhergehenden Ansprüche, **dadurch gekennzeichnet, dass** die wenigstens eine zweite Luftklappe (13, 13a, 13b, 13c) in einer Ansicht senkrecht zu einer Klappenebene der wenigstens einen zweiten Luftklappe (13, 13a, 13b, 13c) keine Ausnehmung aufweist.

9. Luftausströmer nach einem oder mehreren der vorhergehenden Ansprüche, **dadurch gekennzeichnet, dass** die wenigstens eine erste Luftklappe (12, 12a, 12b) und/oder die wenigstens eine zweite Luftklappe (13, 13a, 13b, 13c) im Wesentlichen als ein mehreckiges Gebilde, z. B. drei- oder rechteckförmig, ausgebildet ist oder die wenigstens eine erste Luftleiteinrichtung (10, 10a, 10b) und/oder die wenigstens eine zweite huftleiteinriahtung (11, 11a, 11b, 11c) in einer geschlossenen Stellung im Wesentlichen als ein mehreckiges Gebilde, z. B. drei- oder rechteckförmig, innerhalb des wenigstens einen ersten Luftzuführungskanales (6, 6a, 6b) und/oder des wenigstens einen zweiten Luftzuführungskanales (7, 7a, 7b, 7c) ausgebildet ist

10. Luftausströmer nach einem oder mehreren der vorhergehenden Ansprüche, dadurch gekenntzeichnet, dass der Luftausströmer (1) mit wenigstens einem Mittel zur Erzeugung eines Diffus- oder Drallstrahles an der wenigstens einen zweiten Auslassöffnung (9, 9a, 9b, 9c) versehen ist, z. B. in dem wenigstens einen zweiten Luftzuführungskanal (7, 7a, 7b, 7c).

11. Luftausströmer nach Anspruch 10, **dadurch gekennzeichnet, dass** das wenigstens eine Mittel als schrauben- oder schneckenförmige Luftleitvorrichtung (24) ausgebildet ist.

12. Luftausströmer nach einem oder mehreren der vorhergehenden Ansprücher, **dadurch gekennzeichnet, dass** die wenigstens eine erste Auslassöffnung (8, 8a, 8b) im Querschnitt im Wesentlichen kreis- oder ellipsenförmig ausgebildet ist.

13. Luftausströmer nach einem oder mehreren der vorhergehenden Ansprüche, **dadurch gekennzeichnet, dass** die wenigstens eine erste Auslassöffnung (8, 8a, 8b) im Querschnitt innerhalb der wenigstens einen zweiten Auslassöffnung (9, 9a, 9b, 9c) ausgebildet ist und/oder die wenigstens eine zweite Auslassöffnung (9, 9a, 9b, 9c) konzentrisch um die wenigstens eine erste Auslassöffnung (8, 8a, 8b) ausgebildet ist.

14. Kraftfahrzeugklimaanlage, **dadurch gekennzeichnet, dass** die Kraftfahrzeugklimaanlage wenigstens einen Luftausströmer (1) gemäß einem oder mehreren der vorhergehenden Ansprüche umfasst.

## Claims

1. An air vent (1), in particular for a passenger comportment ventilation system, comprising:
- at least one first air supply duct (6, 6a, 6b) and at least one second air supply duct (7, 7a, 7b, 7c);
- at least one first outlet opening (8, 8a, 8b) for discharging the air from the at least one first air supply duct (6, 6a, 6b) as a spot flew;
- at least one second outlet opening (9, 9a, 9b, 9c) for discharging the air from the at least one second air supply duct (7, 7a, 7b, 7c) as a diffused or swirled flow;
- at least one first air-deflecting device (10, 10a, 10b), in particular at least one first air damper (12, 12a, 12b), for controlling the air volume that can be discharged from the at least one first outlet opening (8, 8a, 8b),
at least one second air-deflecting device (11, 11a, 11b, 11c), in particular at least one second air damper (13, 13a, 13b, 13c), for controlling the air volume that can be discharged from the at least one second outlet opening (9, 9a, 9b, 9c), wherein the extension parallel to a cross-sectional plane (14) of the at least one first air supply duct (6, 6a, 6b) of the at least one first air-deflecting device (10, 10a, 10b) in a completely closed position is at least 50% of the, preferably maximum, dimension of the air vent (1) parallel to the cross-sectional plane (14) of the at least one first air supply duct (6, 6a, 6b), wherein the extension and the dimension in a direction of mouvement, or a component of the direction of movements of the at least one first air-deflecting device (10, 10a, 10b) in a direction parallel to the cross-sectional plane (14) of the at least one first air supply duct (6, 6a, 6b) is detected and/or the extension parallel to the cross-sectional plane (14) of the at least one second air supply duct (7, 7a, 7b, 7c) of the at least one second air-deflecting device (11, 11a, 11b, 11c) in a completely closed position is at least 50% of the, preferably maximum, dimension of the air vent (1) parallel to the cross-sectional plane (14) of the at least one second air supply duct (7, 7a, 7b, 7c), wherein the extension and the dimension in a direction of mouvement, or a component of the direction of movement, of the at least one second air-deflecting device (11, 11a, 11b, 11c) in a direction parallel to the cross-sectional plane (14) of the at least one second air supply duct (7, 7a, 7b, 7c) is detected, **characterized in that** the at least one first air-deflecting device (10, 10a, 10b) and the at least one second air-deflecting device (11, 11a, 11b, 11c), in the completely closed position, are in direct contact with two opposing outside walls (3, 4, 5) of the air vent (1), or are spaced from the two opposing outside walls (3, 4, 5) of the air vent (1) only by an air leakage gap.

2. The air vent according to claim 1, **characterized in that** the at least one first air-deflecting device (10, 10a, 10b) and/or the at least one second air-deflecting device (11, 11a, 11b, 11c) are kinematically coupled to each ether to the effect that, in a first position, the at least one first air supply duct (6, 6a, 6b) is essentially completely closed and the at least one second air supply duct (7, 7a, 7b, 7c) is completely open and, in a second position, the at least one first air supply duct (6, 6a, 6b) is completely open and the at least one second air supply duct (7, 7a, 7b, 7c) is essentially completely closed.

3. The air vent according to claim 2, **characterized in that** positions of the at least one first air-deflecting device (10, 10a, 10b) and of the at least one second air-deflecting device (11, 11a, 11b, 11c) can be adjusted, preferable continuously, between the first position and the second position by only one operating unit (20).

4. An air vent according to one or more of the preceding claims, **characterized in that** only one first air-deflecting device (10, 10a, 10b) is disposed in a first air supply duct (6, 6a, 6b) and/or only one second air-deflecting device (11, 11a, 11b, 11c) is disposed in a second air supply duct (7, 7a, 7b, 7c).

5. An air vent according to one or more of the preceding claim, **characterized in that** at least two first air-deflecting devices (10, 10a, 10b) are kinematically coupled, for example by way of a shaft (28) and/or a lever and/or a gear wheel.

6. An air vent according to one or more of the preceding claims, characterized ion that at least two second air-deflecting devices (11, 11a, 11b, 11c) are kinematically couplet, for example by way of a shaft (29) and/or a lever and/or a gear wheel.

7. An air vent according to one or more of the preceding claims, **characterized in that** the at least one first air-deflecting device (10, 10a, 10b) and/or the at least one second air-deflecting device (11, 11a, 11b, 11c) are designed, with respect to the shape and/or dimension, so that the first air supply duct (6, 6a, 6b) and/or the second air supply duct (7, 7a, 7b, 7c) can essentially be completely closed.

8. An air vent according to one or more of the preceding claims, **characterized in that** the at least one second air damper (13, 13a, 13b, 13c) has no cut-out in a view perpendicular to a damper plane of the at least one second air damper (13, 13a, 13b, 13c).

9. An air vent according to one or more of the preceding claims, **characterized in that** the at least one first air damper (12, 12a, 1b) and/or the at least one second air damper (13, 13a, 13b, 13c) are designed essentially as polygonal structures, for example triangle- or rectangle-shaped, or the at least one first air-deflecting device (10, 10a, 10b) and/or the at least one second air-deflecting device (11, 11a, 11b, 11c), in a closed position, are designed essentially as polygonal structures, for example triangle- or rectangle-shaped, within the at least one first air supply duct (6, 6a, 6b) and/or at least one second air supply duct (7, 7a, 7b, 7c).

10. An air vent according to one or more of the preceding claims, **characterized in that** the air vent (1) is provide with at least one means for generating a diffused or swirled flow at the at least one second outlet opening (9, 9a, 9b, 9c), for example in the at least one second air supply duct (7, 7a, 7b, 7c.

11. The air vent according to claim 10, **characterized in that** the at least one means is designed as a screw- or worm-shaped air-deflecting device (24).

12. An air vent according to one or more of the preceding claims, **characterized in that** the at least one first outlet opening (8, 8a, 8b) has an essentially circular or ellipsoidal cross-section.

13. An air vent according to one or more of the preceding claims, **characterized in that** the at least one first outlet opening (8, 8a, 8b) is configured in the cross-section within the at least one second cutlet opening (9, 9a, 9b, 9c) and/or the at least one second outlet opening (9, 9a, 9b, 9c) is designed concentrically around the at least one first outlet opening (8, 8a, 8b).

14. An air conditioning system, **characterized by** comprising at least one air vent (1) according to one or more of the preceding claims.

## Revendications

1. Diffuseur d'air (1), en particulier pour un système de ventilation de l'habitacle d'un véhicule, comprenant:
- au moins un premier conduit d'alimentation d'air (6, 6a, 6b) et au moins un deuxième conduit d'alimentation d'air (7, 7a, 7b, 7c),
- au moins une première ouverture de sortie (8, 8a, 8b) servant à l'évacuation de l'air sortant comme un jet dirigé, l'air évacué provenant du premier conduit d'alimentation d'air (6, 6a, 6b) au moins au nombre de un,
- au moins une deuxième ouverture de sortie (9, 9a, 9b, 9c) servant à évacuer l'air sortant comme un jet diffus ou comme un jet tourbillonnant, l'air évacué provenant du deuxième conduit d'alimentation d'air (7, 7a, 7b, 7c) au moins au nombre de un,
- au moins un premier dispositifs déflecteur d'air (10, 10a, 10b), en particulier au moins un premier volet d'air (12, 12a, 12b), servant à la commande du débit d'air pouvant être évacué en provenance de la première ouverture de sortie (8, 8a, 8b) au moins au nombre de un,
- au moins un deuxième dispositif déflecteur d'air (11, 11a, 11a, 11c), en particulier au moins un deuxième volet d'air (13, 13a, 13b, 13c), servant à la commande du débit d'air pouvant être évacué en provenance de la deuxième ouverture de sortie (9, 9a, 9b, 9c) au moins au nombre de un,
où l'étendue du premier dispositif déflecteur d'air (10, 10a, 10b) au moins au nombre de un, parallèlement à un plan en coupe transversale (14) du premier conduit d'alimentation d'air (6, 6a, 6b) au moins au nombre de un, est, dans une position complètement fermée, au moins égale à 50 % de la dimension - de préférence maximale - du diffuseur d'air (1) parallèlement au plan en coupe transversale (14) du premier conduit d'alimentation d'air (6, 6a, 6b) au moins au nombre de un, où l'étendue et la dimension du premier dispositif déflecteur d'air (10, 10a, 10b) au moins au nombre de un, dans une direction de mouvement ou d'un composant de la direction de mouvement, sont détectées suivant une direction parallèle au plan en coupe transversale (14) du premier conduit d'alimentation d'air (6, 6a, 6b) au moins au nombre de un et/ou l'étendue du deuxième dispositif déflecteur d'air (11, 11a, 11b, 11c) au moins au nombre de un, parallèlement au plan en coupe transversale (14) du deuxième conduit d'alimentation d'air (7, 7a, 7b 7c) au moins au nombre de un, est, dans une position complètement fermée, au moins égale à 50 % de la dimension - de préférence maximale - du diffuseur d'air (1) parallèlement au plan en coupe transversale (14) du deuxième conduit d'alimentation d'air (7, 7a, 7b, 7c) au moins au nombre de un, où l'étendue et la dimension du deuxième dispositif déflecteur d'air (11, 11a, 11b, 11c) au moins au nombre de un, dans une direction de mouvement ou d'un composant de la direction de mouvement, sont détectées suivant une direction parallèle au plan en coupe transversale (14) du deuxième conduit d'alimentation d'air (7, 7a, 7b, 7c) au moins au nombre de un, **caractérisé en ce que** le premier dispositif déflecteur d'air (10, 10a, 10b) au moins au nombre de un et le deuxième dispositif déflecteur d'air (11, 11a, 11b, 11c) au moins au nombre de un sont, dans la position complètement fermées au contact direct de deux parois extérieures opposées (3, 4, 5) du diffuseur d'air (1) ou bien sont espacées seulement par un interstice d'air de fuite des deux parois extérieures opposées (3, 4, 5) du diffuseur d'air (1).

2. Diffuseur d'air selon la revendication 1, **caractérisé en ce que** le premier dispositifs déflecteur d'air (10, 10a, 10b) au moins au nombre de un et/ou le deuxième dispositif déflecteur d'air (11, 11a, 11b, 11c) au moins au nombre de un sont couplés l'un à l'autre de façon cinématique, faisant que, dans une première position, le premier conduit d'alimentation d'air (6, 6a, 6b) au moins au nombre de un est pratiquement complètement fermé et le deuxième conduit d'alimentation d'air (7, 7a, 7b, 7c) au moins au nombre de un est complètement ouvert et, dans une deuxième position, le premier conduit d'alimentation d'air (6, 6a, 6b) au moins au nombre de un est complètement ouvert et le deuxième conduit d'alimentation d'air (7, 7a, 7b, 7c) au moins au nombre de un est pratiquement complètement fermé.

3. Diffuseur d'air selon la revendication 2, **caractérisé en ce que** des positions du premier dispositif déflecteur d'air (10, 10a, 10b) au moins au nombre de un et du deuxième dispositif déflecteur d'air (11, 11a, 11b, 11c) au moins au nombre de un sont réglables - de préférence en continu - seulement par une unité de commande (20), entre la première position et la deuxième position.

4. Diffuseur d'air selon l'une quelconque ou plusieurs des revendications précédente, **caractérisé en ce que** seulement un premier dispositif déflecteur d'air (10, 10a, 10b) est disposé dans un premier conduit d'alimentation d'air (6, 6a, 6b) et/ou seulement un deuxième dispositif déflecteur d'air (11, 11a, 11b, 11c) est disposé dans un deuxième conduit d'alimentation d'air (7, 7a, 7b, 7c).

5. Diffuseur d'air selon l'une quelconque ou plusieurs des revendications précédentes, **caractérisé en ce qu'**au moins deux premiers dispositifs déflecteurs d'air (10, 10a, 10b) sont couplés de façon cinématique, par exemple au moyen d'un arbre (28) et/ou d'un levier et/ou d'une roue dentée.

6. Diffuseur d'air selon l'une quelconque ou plusieurs des revendications précédentes, **caractérisé en ce qu'**au moins deux deuxièmes dispositifs déflecteurs d'air (11, 11a, 11b, 11c) sont couplés de façon cinématique, par exemple au moyen d'un arbre (29) et/ou d'un levier et/ou d'une roue dentée.

7. Diffuseur d'air selon l'une quelconque ou plusieurs des revendication précédentes, **caractérisé en ce que** le premier dispositif déflecteur d'air (10, 10a, 10b) au moins au nombre de un et/ou le deuxième dispositif déflecteur d'air (11, 11a, 11b, 11c) au moins au nombre de un est configuré dans sa forme et/ou dans sa dimension, de manière telle que le premier conduit d'alimentation d'air (6, 6a, 6b) et/ou le deuxième conduit d'alimentation d'air (7, 7a, 7b, 7c) puisse être fermé pratiquement de façon complète.

8. Diffuseur d'air selon l'une quelconque ou plusieurs des revendication précédentes, **caractérisé en ce que** le deuxième volet d'air (13, 13a, 13b, 13c) au moins au nombre de un, dans une vue perpendiculaire à un plan de volet du deuxième volet d'air (13, 13a, 13b, 13c) au moins au nombre de un, ne présente aucun creux.

9. Diffuseur d'air selon l'une quelconque ou plusieurs des revendications précédentes, **caractérisé en ce que** le premier volet d'air (12, 12a, 1b) au moins au nombre de un et/ou le deuxième volet d'air (13, 13a, 13b, 13c) au moins au nombre de un est configuré sensiblement comme une forme polygonale, par exemple en forme de triangle ou de rectangle, ou bien le premier dispositif déflecteur d'air (10, 10a, 10b) au moins au nombre de un et/ou le deuxième dispositif déflecteur d'air (11, 11a, 11b, 11c) au moins au nombre de un, dans une position fermée, est configuré à l'intérieur du premier conduit d'alimentation d'air (6, 6a, 6b) au moins au nombre de un et/ou du deuxième conduit d'alimentation d'air (7, 7a, 7b, 7c) au moins au nombre de un, sensiblement comme une forme polygonale, par exemple en forme de triangle ou de rectangle.

10. Diffuseur d'air selon l'une quelconque ou plusieurs des revendications précédentes, **caractérisé en ce que** le diffuseur d'air (1), par exemple dans le deuxième conduit d'alimentation d'air (7, 7a, 7b, 7c) au moins au nombre de un, est doté, d'au moins un moyen servant à fournir un jet diffus ou tourbillonnant se produisant au niveau de la deuxième ouverture de sortie (9, 9a, 9b, 9c) au moins au nombre de un.

11. Diffuseur d'air selon la revendication 10, **caractérisé en ce que** le moyen au nombre de un est conçu comme un dispositif déflecteur d'air (24) de forme hélicoïdale ou en forme de vis sans fin.

12. Diffuseur d'air selon l'une quelconque ou plusieurs des revendications précédente, **caractérisé en ce que** la première ouverture de sortie (8, 8a, 8b) au moins au nombre de un est configurée, en section, en ayant sensiblement une forme de cercle ou d'ellipse.

13. An air vent according to one or more of the preceding claims, **characterized in that** the at least one first outlet opening (8, 8a, 8b) is configured in the cross-section within the at least one second outlet opening (9, 9a, 9b, 9c) and/or the at least one second outlet opening (9, 9a, 9b, 9c) is designed concentrically around the at least one first outlet opening (8, 8a, 8b).

14. An air conditioning system, **characterized by** comprising at least one air vent (1) according to one or more of the preceding claims.
